(19) Europäisches Patentamt / European Patent Office / Office européen des brevets

(11) EP 2 765 635 A1

(12) **EUROPEAN PATENT APPLICATION**
published in accordance with Art. 153(4) EPC

(43) Date of publication:
**13.08.2014 Bulletin 2014/33**

(51) Int Cl.:
*H01M 4/133* (2010.01)    *H01M 4/36* (2006.01)
*H01M 4/587* (2010.01)    *H01M 10/0525* (2010.01)
*H01M 10/0587* (2010.01)

(21) Application number: **12838909.5**

(22) Date of filing: **27.09.2012**

(86) International application number:
**PCT/JP2012/074826**

(87) International publication number:
**WO 2013/051444 (11.04.2013 Gazette 2013/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2011 JP 2011220974**

(71) Applicant: **Sumitomo Bakelite Co., Ltd.**
**Shinagawa-ku**
**Tokyo 140-0002 (JP)**

(72) Inventors:
• **SASAKI, Tatsuro**
**Tokyo 140-0002 (JP)**
• **ICHIKAWA, Yuichi**
**Tokyo 140-0002 (JP)**

(74) Representative: **Schollweck, Susanne**
**ZSP Patentanwälte**
**Partnerschaftsgesellschaft**
**Radlkoferstrasse 2**
**81373 München (DE)**

(54) **NEGATIVE ELECTRODE FOR LITHIUM ION SECONDARY BATTERIES, AND LITHIUM ION SECONDARY BATTERY**

(57) Provided are negative electrode for lithium ion secondary batteries, which is capable of realizing a lithium ion secondary battery having characteristics such as stable output and stable capacity, and a lithium ion secondary battery having characteristics such as stable output and stable capacity. The negative electrode for lithium ion secondary batteries includes a laminated body of a negative electrode material layer that is mainly constituted by a carbonaceous material, and a negative electrode current collector. When the negative electrode material layer is in a dry state, a limit radius of curvature of a negative electrode is 15 mm or less. Content of the hard carbon in the carbonaceous material is preferably 5% by weight to 45% by weight.

FIG. 1

EP 2 765 635 A1

## Description

Technical Field

The present invention relates to a negative electrode for lithium ion secondary batteries, and a lithium ion secondary battery.

Priority is claimed on Japanese Patent Application No. 2011-220974, filed October 5, 2011, the content of which is incorporated herein by reference.

Background Art

In the related art, a carbonaceous material has been used in a negative electrode for lithium ion secondary batteries. This is because even when charge and discharge cycles are in progress, dentrite-shaped lithium is less likely to precipitate on a negative electrode using the carbonaceous material, and thus safety is secured.

However, generally, the lithium ion secondary battery is produced by inserting a wound body, which is obtained by winding a laminated body in which a positive electrode, a negative electrode, and a separator are laminated in a battery casing, injecting an electrolytic solution into the battery casing, and by sealing the battery casing (refer to PTL 1). In the lithium ion secondary battery configured as described above, the number of times of winding is increased to enlarge a contact area between the electrolyte, the positive electrode, and the negative electrode, thereby improving battery capacity and battery output.

However, a stress is applied to the positive electrode and the negative electrode during winding, and thus there is a problem in that a material (active material) which constitutes each of the electrodes is peeled. In addition, the material that is peeled penetrates the separator, and thus a short-circuit tends to occur, or characteristics deteriorate due to the peeling of the separator. Particularly, this tendency occurs in the negative electrode, thereby causing a problem.

Citation List

Patent Literature

[PTL1] Japanese Unexamined Patent Application, First Publication No. 2404-319311

Summary of Invention

Technical Problem

An object of the invention is to provide a negative electrode for lithium ion secondary batteries, which is capable of realizing a lithium ion secondary battery having characteristics such as stable output and stable capacity, and a lithium ion secondary battery having characteristics such as stable output and stable capacity.

Solution to Problem

The object is accomplished by the invention described in the following (1) to (8).

(1) According to an aspect of the invention, there is provided a negative electrode for lithium ion secondary batteries. The negative electrode includes a laminated body of a negative electrode material layer that is mainly constituted by a carbonaceous material, and a negative electrode current collector. When the negative electrode material layer is in a dry state, a limit radius of curvature of a negative electrode is 15 mm or less.

(2) In the negative electrode for lithium ion secondary batteries according to (1), the carbonaceous material may contain hard carbon.

(3) In the negative electrode for lithium ion secondary batteries according to (2), content of the hard carbon in the carbonaceous material may be 5% by weight to 45% by weight.

(4) In the negative electrode for lithium ion secondary batteries according to any one of (1) to (3), a positron lifetime of the hard carbon, which is measured by a position annihilation method under the following conditions (A) to (E), may be 370 picoseconds to 480 picoseconds.

(A) positron source: Positrons are generated from electron-positron pairs by using an electron accelerator,

(B) gamma-ray detector: $BaF_2$ scintillator and photomultiplier tube,

(C) measurement temperature and atmosphere: 25°C; in vacuum,

(D) number of counts of annihilation $\gamma$-rays: $3\times10^6$ or more, and

(E) Positron beam energy: 10 keV.

In addition, a full width at half maximum of a peak, which is measured by X-ray photoelectron spectroscopy (XPS method) and is recognized in the vicinity of 285 eV, maybe 0.8 eV to 1.8 eV.

(5) In the negative electrode for lithium ion secondary batteries according to any one of (1) to (4), the carbonaceous material may contain graphite.

(6) In the negative electrode for lithium ion secondary batteries according to (5), content of the graphite may be 55% by weight to 95% by weight.

(7) In the negative electrode for lithium ion secondary batteries according to any one of (1) to (6), the carbonaceous material may contain hard carbon and carbonaceous material, and when content of the graphite is set to A [% by weight] and content of the hard carbon is set to B [% by weight], a relationship of $1.2\leq A/B\leq 19$ may be satisfied.

(8) According to another aspect of the invention, there is provided a lithium ion secondary battery including a wound body that is obtained by winding laminated body in which the negative electrode for lithium ion secondary batteries according to any one of claims 1 to 7, a separator, and a positive electrode for lithium ion secondary batteries are laminated, and an electrolyte.

Advantageous Effects of Invention

According to the invention, it is possible to provide a negative electrode for lithium ion secondary batteries, which is capable of realizing a lithium ion secondary battery having characteristics such as stable output and stable capacity, and a lithium ion secondary battery having characteristics such as stable output and stable capacity.

Brief Description of Drawings

FIG. 1 is a cross-sectional view illustrating an example of a negative electrode for lithium ion secondary batteries of the invention.

FIG. 2 is a view illustrating a relationship between the number of counts of annihilation $\gamma$-rays and a positron annihilation time.

FIG. 3 is a cross-sectional view illustrating an example of a layer configuration of a wound body that is applied to a lithium ion secondary battery.

FIG. 4 is a schematic view illustrating an example of a wound body that constitutes a lithium ion secondary battery.

Description of Embodiments

Hereinafter, an embodiment of the invention will be described with reference to the attached drawings.

<Negative Electrode for Lithium Ion Secondary Batteries>

First, a negative electrode for lithium ion secondary batteries of the invention will be described.

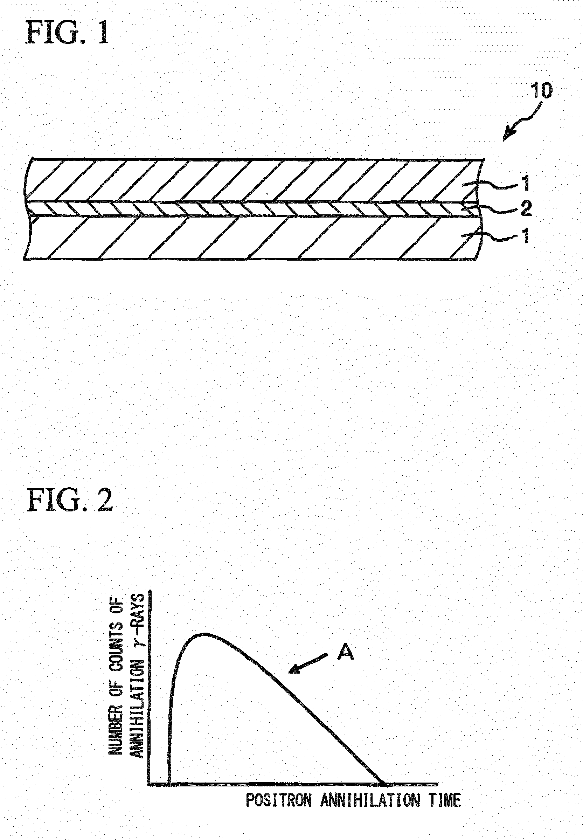

FIG 1 is a cross-sectional view illustrating an example of a negative electrode for lithium ion secondary batteries of the invention, and FIG. 2 is a view illustrating a relationship between the number of counts of annihilation $\gamma$-rays and a positron annihilation time.

As shown in FIG 1, a negative electrode for lithium ion secondary batteries (hereinafter, may also be simply referred to as "negative electrode") 10 according to this embodiment is configured as a laminated body in which two negative electrode material layers 1 and a negative electrode current collector 2 interposed between the two negative electrode material layers 1 are laminated.

Each of the negative electrode material layers 1 is a layer that is constituted mainly by a carbonaceous material.

For example, the negative electrode current collector 2 is constituted by copper foil, nickel foil, and the like.

However, generally, the lithium ion secondary battery is produced by inserting a wound body, which is obtained by winding a laminated body in which a positive electrode, a negative electrode, and a separator are laminated, in a battery casing, injecting an electrolytic solution into the battery casing, and by sealing the battery casing. In the lithium ion secondary battery configured as described above, the number of times of winding is increased to enlarge a contact area between the electrolyte, the positive electrode, and the negative electrode, thereby improving battery capacity and battery output.

However a stress is applied to the positive electrode and the negative electrode during winding, and thus there is a problem in that a material (active material) which constitutes each of the electrodes is peeled. In addition, the material that is peeled penetrates the separator, and thus a short-circuit tends to occur, or characteristics deteriorate due to peeling of the the separator. Particularly, this tendency occurs in the negative electrode, thereby causing a problem.

In contrast, the negative electrode for lithium ion secondary batteries of the invention has a characteristic in which a limit radius of curvature when a negative electrode material layer is in a dry state is 15 mm or less. This characteristic is provided, and thus during production of the lithium ion secondary battery, peeling of the negative electrode material layer (negative electrode material) can be effectively prevented during winding. As a result, a short-circuit or deterioration in characteristics can be prevented, and thus it is possible to produce a lithium ion secondary battery having characteristics such as stable output and stable capacity.

In addition, in the invention, the limit radius of curvature is 15 mm or less. However, the limit radius of curvature is preferably 10 mm or is less, and still more preferably 2 mm or less. In this case, the effect of the invention may be made more significant. In contrast, when the limit radius of curvature exceeds the upper limit, damage or the like may occur in the negative electrode material layer or the negative electrode current collector during winding, and thus a short-circuit or deterioration in characteristics may occur.

Here, the limit radius of curvature represents the minimum radius of a column with which abnormality such as interlayer peeling and damage does not occur in the negative electrode material layer and the negative electrode current collector when winding the negative electrode around a column with one turn (360°).

In addition, measurement of the limit radius of curvature is performed when the negative electrode material layer is in a dry state. However, specifically, the negative electrode material layer in the dry state represents a state in which a variation in weight is not observed before and after the negative electrode material layer is dried at 130°C for 30 minutes.

As a main material that constitutes the negative electrode material layer as described above, a carbonaceous material is used.

Examples of the carbonaceous material include hard carbon (non-graphitizable carbon), graphite, and the like.

Particularly, as the carbonaceous material, it is preferable to use the hard carbon and the graphite in combination. In this case, stability during cycles is raised while increasing charging and discharging efficiency, and thus input and output characteristics of a large current may be improved. In addition, when using the hard carbon and the graphite in combination, it is possible to make the limit radius of curvature smaller. As a result, it is possible to realize a lithium ion secondary battery having characteristics such as more stable output and more stable capacity.

Hereinafter, respective components will be described.

(Graphite)

Graphite is one of allotropes of carbon, and is a material of hexagonal, hexagonal plate-like crystal which forms a layer-like lattice constituted by a layer in which 6 carbocyclic rings are connected to each other.

In a case of using graphite as a carbonaceous material, it is possible to improve charging and discharging efficiency (discharging capacity/charging capacity).

It is preferable that graphite content in the carbonaceous material for lithium ion secondary batteries be 55% by weight to 95% by weight, and more preferably 60% by weight to 85% by weight. When the graphite content is in the above-described range, stability during cycles is raised while increasing charging and discharging efficiency, and thus input and output characteristics of a large current may be improved. In contrast, when the graphite content is less than the lower limit, sufficient charging and discharging efficiency cannot be obtained. On the other hand, when the graphite content exceeds the upper limit, the effect of improving stability during cycles and input and output characteristics of a large current are not sufficient.

(Hard Carbon)

The hard carbon (non-graphitizable carbon) is a carbonaceous material which can be obtained by baking a polymer in which a graphite crystal structure is less likely to be developed, and is an amorphous material. In other words, the hard carbon is a carbonaceous material that can be obtained by subjecting a resin or a resin composition to a carbonization treatment.

In a case of using the hard carbon as the carbonaceous material, stability during cycles is raised, and thus input and output characteristics of a large current may be improved.

It is preferable that the hard carbon content in the carbonaceous material for lithium ion secondary battery be 5% by weight to 45% by weight, and more preferably 15% by weight to 40% by weight. According to this, it is possible to more effectively increase stability during cycles and improve input and output characteristics of a large current without deteriorating excellent charging and discharging efficiency.

In a case of using graphite and hard carbon in combination, when the graphite content is set to A [% by weight] and the hard carbon content is set to B [% by weight], it is preferable to satisfy a relationship of $1.2 \leq A/B \leq 19$, and more preferably a relationship of $1.5 \leq A/B \leq 5$. When this relationship is satisfied, it is possible to more effectively increase stability during cycles and improve input and output characteristics of a large current without deteriorating excellent charging and discharging efficiency.

A resin contained in a resin or resin composition which is a raw material of the hard carbon is not particularly limited and examples thereof include a thermosetting resin, a thermoplastic resin, petroleum- or coal-based tar or pitch such as petroleum-based tar or pitch that is produced as a byproduct during production of ethylene, coal tar that is generated during coal carbonization, a heavy component or pitch obtained by removing a low-boiling point component from coal tar by distillation, tar or pitch that can be obtained by liquefying coal, a material obtained by subjecting tar, pitch, and the like to a cross-linking treatment, and the like. These materials may be used alone or in a combination of two or more kinds.

In addition, as described below, the resin composition may contain a curing agent, an additive, and the like in addition to the resin as a main component. In addition, a cross-linking treatment by oxidization may be appropriately performed.

The thermosetting resin is not particularly limited, and examples thereof include a phenol resin such as a novolac type phenol resin and a resol type phenol resin, an epoxy resin such as a bisphenol type epoxy resin and a novolac type epoxy resin, a melamine resin, a urea resin, an aniline resin, a cyanate resin, a furan resin, a ketone resin, an unsaturated polyester resin, a urethane resin, and the like. In addition, modified products, which are obtained by modifying these resins into various components, may be used.

In addition, the thermoplastic resin is not particularly limited, and examples thereof include polyethylene, polystyrene, polyacrylonitrile, an acrylonitrile-styrene (AS) resin, an acrylonitrile-butadiene-styrene (ABS) resin, polypropylene, polyvinyl chloride, a methacrylic resin, polyethylene terephthalate, polyamide, polycarbonate, polyacetal, polyphenylene ether, polybutylene terephthalate, polyphenylene sulfide, polysulfone, polyether sulfone, polyether ether ketone, polyether imide, polyamide imide, polyimide, polyphthalamide, and the like.

Particularly, as a resin that is a main component used in the hard carbon, thermosetting resins are preferable. According to this, it is possible to further increase an actual carbon ratio of the hard carbon.

Particularly, among the thermosetting resins, a resin, which is selected from a novolac type phenol resin, a resol type phenol resin, a melamine resin, a furan resin, an aniline resin, and modified products thereof, is preferable. According to this, a degree of freedom for design of the carbonaceous material becomes broad, and thus it is possible to produce the carbonaceous material at low cost. In addition, it is possible to further increase stability during cycles and improve input and output characteristics of a large current.

In addition, in a case of using the thermosetting resin, a curing agent thereof may be used in combination.

The curing agent that is used is not particularly limited. For example, in a case of using a novolac type phenol resin, hexamethylene tetramine, a resol type phenol resin, polyacetal, paraformaldehyde, and the like may be used. In addition, in a case of the epoxy resin, curing agents such as polyamine compounds including aliphatic polyamine and aromatic polyamine, acid anhydrides, an imidazole compound, dicyandiamide, a novolac type phenol resin, a bisphenol type phenol resin, a resol type phenol resin, and the like, which are known as curing agents in an epoxy resin, may be used.

In addition, even with regard to a thermosetting resin that uses a predetermined amount of the curing agent in combination, in a case of the resin composition that is used in this embodiment, the curing agent is used in an amount less than an amount in a typical case, or the resin composition may be used without using the curing agent in combination.

In addition, in the resin composition as the raw material of the hard carbon, additives may be mixed in in addition to the above-described components.

The additives that are used are not particularly limited, and examples thereof include carbonaceous material precursors that are subjected to a carbonization treatment at 200°C to 800°C, organic acids, inorganic acids, nitrogen-containing compounds, oxygen-containing compounds, aromatic compounds, and non-metal elements, and the like. These additives may be used alone or in a combination of two or more kinds according to a kind of a resin that is used or properties thereof.

The resin that is used as the raw material of the hard carbon may contain the following nitrogen-containing resins as a main component resin. In addition, in a case where the nitrogen-containing resins are not included in the main component resin, at least one or more kinds of nitrogen-containing compounds may be contained as components other than the main component resin. In addition, the nitrogen-containing resins may be contained as the main component, and the nitrogen-containing compounds may be contained in combination as the components other than the main component resin. The nitrogen-containing hard carbon may be obtained by subjecting these resins to a carbonization treatment. When nitrogen is contained in the hard carbon, suitable electric characteristics may be provided to the hard carbon (carbonaceous material for lithium ion secondary batteries) due to the electronegativity of nitrogen. According to this, intercalation and deintercalation of lithium ions are promoted, and thus excellent charging and discharging characteristic may be provided.

Here, as the nitrogen-containing resins, the following resins may be exemplified. As thermosetting resins, a phenol resin, an epoxy resin, and the like, which are modified with nitrogen-containing components such as amine, may be exemplified in addition to a melamine resin, a urea resin, an aniline resin, a cyanate resin, and a urethane resin.

As thermoplastic resins, polyacrylonitrile, an acrylonitrile-styrene (AS) resin, an acrylonitrile-butadiene-styrene (ABS) resin, polyamide, polyether imide, polyamide imide, polyimide, polyphthalamide, and the like may be exemplified.

In addition, as resins other than the nitrogen-containing resins, the following resins may be exemplified.

As thermosetting resins, a phenol resin, an epoxy resin, a furan resin, an unsaturated polyester resin, and the like may be exemplified.

As thermoplastic resins, polyethylene, polystyrene, polypropylene, polyvinyl chloride, a methacrylic resin, polyethylene terephthalate, polycarbonate, polyacetal, polyphenylene ether, polybutylene terephthalate, polyphenylene sulfide, polysulfone, polyether sulfone, polyether ether ketone, and the like may be exemplified.

In addition, in a case of using the nitrogen-containing compounds as components other than the main component resin, the kind of the nitrogen-containing compounds is not particularly limited. However, in addition to curing agent components such as hexamethylene tetramine, which is a curing agent of a novolac type phenol resin; and aliphatic polyamine, aromatic polyamine, and dicyandiamide, which are curing agents of an epoxy resin, nitrogen-containing compounds such as an amine compound, an ammonium salt, a nitrate, a nitro compound, and the like, which do not function as curing agents, may be used.

Irregardless the nitrogen-containing resins are contained or not contained in the main component resin, the nitrogen-containing compounds may be used alone or in a combination of two or more kinds.

The nitrogen content in the resin composition or the resins which are used as the raw material of the hard carbon is not particularly limited. However, it is preferable that the nitrogen content be 5% by weight to 65% by weight, and more preferably 10% by weight to 20% by weight.

The carbon atom content in the hard carbon, which can be obtained by performing a carbonization treatment of the resin composition or the resins, is preferably 95% by weight or more, and the nitrogen atom content is preferably 0.5% by weight to 5% by weight.

As described above, when nitrogen atoms are contained in an amount of 0.5% by weight or more, and particularly, 1.0% by weight or more, suitable electric characteristics may be provided to the hard carbon due to the electronegativity of nitrogen. According to this, intercalation and deintercalation of lithium ions are promoted, and thus excellent charging and discharging characteristic may be provided.

In addition, when the nitrogen atoms are set to 5% by weight or less, and particularly, to 3% by weight or less, the electric characteristics provided to the hard carbon is suppressed from being excessively strong, and thus intercalated lithium ions are prevented from causing electrical adsorption with nitrogen atoms. According to this, an increase in irreversible capacity is suppressed, and thus excellent charging and discharging characteristics may be obtained.

The nitrogen content in the hard carbon can be adjusted by appropriately setting carbonization conditions of the resin composition or the resin in addition to the nitrogen content in the resin composition or the resin. In addition, in a case of performing a curing treatment or pre-carbonization treatment before the carbonization treatment, the nitrogen content in the hard carbon also can be adjusted by appropriately setting conditions of these treatments.

For example, examples of a method of obtaining a carbonaceous material that contains nitrogen in the above-described nitrogen content include a method in which the nitrogen content in the resin composition or the resin is set to a predetermined value, and conditions during carbonization treatment thereof, particularly, a final temperature, is adjusted.

A method of preparing the resin composition that is used as the raw material of the hard carbon is not particularly limited. For example, the resin composition may be prepared by a method of mixing the main component resin and other components in a predetermined ratio and melting and mixing the resultant mixture, a method of dissolving and mixing the components in a solvent, a method of pulverizing and mixing the components, and the like.

In this specification, the nitrogen content is measured according to a thermal conductivity method.

The thermal conductivity method is a method of converting a measurement sample into a simple gas ($CO_2$, $H_2O$, and $N_2$) using a combustion method, homogenizing the gasified sample, and allowing the gasified sample to pass through a column. According to this, these gases are separated from each other step by step, and the carbon content, the hydrogen content, and the nitrogen content can be measured from respective thermal conductivities.

In addition, in the invention, the measurement was performed using an element analysis and measurement device "PE2400," manufactured by PerkinElmer, Inc.

In addition, with regard to the hard carbon that is used in the invention, it is preferable that a positron lifetime measured by a positron annihilation method be 370 picoseconds to 480 picoseconds, and more preferably 380 picoseconds to 460 picoseconds.

In a case where the positron lifetime measured by the positron annihilation method is 370 picoseconds to 480 picoseconds, as described below, it can be said that a void with a size at which exit and entrance of lithium easily occurs is formed in the hard carbon. In this case, it is possible to further increase charging capacity and discharging capacity of the carbonaceous material for lithium ion secondary batteries.

In addition, the measurement of the positron lifetime according to the positron annihilation method is performed under the following conditions.

(A) Positron source: Positrons are generated from electron-positron pairs by using an electron accelerator
(B) Gamma-ray detector: $BaF_2$ scintillator and photomultiplier tube
(C) Measurement temperature and atmosphere: 25°C, in vacuum
(D) Number of counts of annihilation $\gamma$-rays: $3 \times 10^6$ or more
(E) Positron beam energy: 10 keV.

In addition, a full width at half maximum of a peak, which is measured by X-ray photoelectron spectroscopy (XPS method) and is recognized in the vicinity of 285 eV, is 0.8 eV to 1.8 eV.

Here, a relationship between the positron lifetime and the void size will be described.

A positron lifetime method is a method of measuring the void size by measuring an amount of time passing before a positron ($e^+$) is annihilated after the positron is incident to a sample.

The positron is antimatter of an electron, and has the same rest mass as the electron. A charge of the positron is positive.

It is known that when being incident to a substance, the positron forms a pair with an electron (positron-electron pair (positronium)) and is annihilated. When the positron is allowed to enter a carbonaceous material, the positron ($e^+$) is coupled to one of electrons driven out from a polymer to form positronium. The positronium is trapped in a portion of a polymeric material in which an electron density is low, that is, in a local void inside the polymer, overlaps with an electron cloud emitted from a void wall, and is annihilated. In a case where the positroinium is present in the void inside the polymer, the void size and the annihilation lifetime of the positronium are inversely proportional to each other. That is, if the void is small, the overlap between the positronium and an ambient electron becomes large, and thus the annihilation lifetime of the positron becomes short. On the other hand, if the void is large, the positronium is less likely to overlap with another electron emitted from the void wall and is less likely to be annihilated, and thus the annihilation lifetime of the positronium becomes long. Accordingly, it is possible to evaluate the size of the void inside the carbonaceous material by measuring the annihilation lifetime of the positronium.

As described above, the positron which is incident to the carbonaceous material forms a positronium in combination with an electron after losing energy, and is annihilated. At this time, $\gamma$-rays are emitted from the carbonaceous material.

Accordingly, the $\gamma$-rays that are emitted serve as a measurement termination signal.

In the measurement of the annihilation lifetime of the positron, an electron accelerator as a positron source or a general-purpose radioactive isotope $^{22}Na$ is frequently used. In a case where $\beta^+$ collapse into $^{22}Ne$ occurs, $^{22}Na$ emits a positron and a $\gamma$-ray of 1.28 MeV simultaneously. The positron that is incident to the carbonaceous material emits $\gamma$-rays of 511 keV through an annihilation process. Accordingly, if the $\gamma$-rays of 1.28 MeV are set as an initiation signal, and the $\gamma$-rays of 511 keV. are set as a termination signal, it is possible to obtain the annihilation lifetime of the positron by measuring a time difference between the signals. Specifically, it is possible to obtain a positron lifetime spectrum as shown in FIG 2. An inclination A of the positron lifetime spectrum indicates the positron lifetime, and thus it is possible to grasp the positron lifetime of the carbonaceous material from the positron lifetime spectrum.

In addition, in a case of using the electron accelerator as the position source, generation of an electron-positron pair is caused to occur by using bremsstrahlung X-ray that is generated by irradiating a target formed from tantalum or tungsten with electron beams, thereby generating a positron. In the case of the electron accelerator, measurement is performed in such a manner that a point of time at which the positron beam is incident to a sample is set as a measurement initiation point (corresponding to the initiation signal in $^{22}Na$), and a termination signal is set in the same principle as in the case of $^{22}Na$.

In a case where the positron lifetime measured by the position annihilation method is less than 370 picoseconds, the void size is too small, and thus intercalation and deintercalation of lithium ions are less likely to occur. In addition, when the positron lifetime measured by the positron annihilation method exceeds 480 picoseconds, an intercalation amount of lithium increases, but electrostatic capacity increases due to intrusion of other substances such an an electrolytic solution, and thus it is assumed that lithium is less likely to be emitted.

In addition, with regard to the hard carbon, the full width at half maximum of a peak, which is measured by the XPS method and is recognized in the vicinity of 285 eV, is preferably 0.8 eV to 1.8 eV, and more preferably 0.9 eV to 1.6 eV. In a case where the full width at half maximum of a peak, which is measured by the XPS method and is recognized in the vicinity of 285 eV, is 1.8 eV or less, the majority of elements that are present on the surface of the hard carbon have an inactive C-C bond and the like, and thus it enters a state in which a functional group or an impurity that reacts with an active material relating to ion conduction of lithium ions and the like is substantially not present. In addition, in a case where the full width at half maximum of a peak, which is recognized in the vicinity of 285 eV, is 0.8 eV or more, there is no problem such as excessive crystallization. Accordingly, as is the case with the present carbonaceous material, when the full width at half maximum of a peak, which is measured by the XPS method and is recognized in the vicinity of 285 eV, is 0.8 eV to 1.8 eV, a decrease in charging and discharging efficiency due to irreversible capacity is suppressed.

Next, a relationship between the XPS measurement and a surface state will be described.

The XPS measurement method is a method of irradiating a surface of a solid sample with X-rays and measuring a kinetic energy of a photoelectron discharged from an atom excited according to the irradiation to obtain a bonding energy (having an intrinsic value depending on an atom) of electrons in an atom, thereby performing identification of constituent elements that are present on the surface.

The surface state may also be analyzed by an FT-IR method. However, this method performs identification of a chemical bond that is present at a position distant from the surface by approximately 1 $\mu$m, In contrast, in the XPS measurement method, it is possible to perform identification of elements that are present at a position distant from the surface by several Å. According to this, when performing identification of a functional group that is relatively close to the surface, it is preferable to use the XPS measurement method.

With regard to the hard carbon, an average interplanar spacing $d_{002}$ of a (002) plane, which is calculated from a wide angle X-ray diffraction method by using the Bragg equation, is preferably 3.4 Å to 3.9 Å. In a case where the average interplanar spacing $d_{002}$ is 3.4 Å or more, particularly, 3.6 Å or more, interlayer contraction and expansion, which accompany intercalation of lithium ions, are less likely to occur, and thus a decrease in charging and discharging cycle characteristics can be suppressed.

In contrast, in a case where the average interplanar spacing $d_{002}$ is 3.9 Å or less, particularly, 3.8 Å or less, intercalation and deintercalation of lithium ions are smoothly performed, and thus a decrease in charging and discharging efficiency can be suppressed.

Further, with regard to the hard carbon, the size Lc of a crystallite in a c-axis direction (direction that is perpendicular to a (002) plane) is preferably 8 Å to 50 Å.

When Lc is set to 8 Å or more, particularly, 9 Å or more, a space between carbon layers, at which intercalation and deintercalation of lithium ions are possible, is formed, and thus there is an effect of obtaining sufficient charging and discharging capacity. When Lc is set to 50 Å or less, particularly, 15 Å or less, collapse of a carbon lamination structure due to intercalation and deintercalation of lithium ions, or reductive decomposition of an electrolytic solution is suppressed, and thus there is an effect capable of suppressing a decrease in the charging and discharging efficiency and the charging and discharging cycle characteristics.

Lc is calculated as follows.

Lc is determined from a full width at half maximum of a 002-plane peak in a spectrum which is obtained from X-ray diffraction measurement, and a diffraction angle by using the following Scherrer equation.

$$Lc = 0.94 \; \lambda/(\beta\cos\theta) \quad \text{(Scherrer equation)}$$

Lc: Size of a crystallite
$\lambda$: Wavelength of characteristic X-ray K$\alpha$1 output from a negative electrode
$\beta$: Full width at half maximum (radian) of a peak
$\theta$: Reflection angle of a spectrum

An X-ray diffraction spectrum in the hard carbon is measured by an X-ray diffraction device "XRD-7000" manufactured by SHIMADZU CORPORATION. A method of measuring the average interplanar spacing in the hard carbon is as follows.

The average interplanar spacing d is calculated from a spectrum obtained by the X-ray diffraction measurement with respect to the hard carbon by using the following Bragg equation.

$$\lambda = 2d_{hkl}\sin\theta \; \text{(Bragg equation)} \; (d_{hkl} = d_{002})$$

$\lambda$: Wavelength of characteristic X-ray K$\alpha$1 output from a negative electrode
$\theta$: Reflection angle of a spectrum

Further, with regard to the hard carbon, a specific surface area according to a BET 3-point method in nitrogen adsorption is preferably 1 $m^2$/g to 15 $m^2$/g.

When the specific surface area according to the BET 3-point method in nitrogen adsorption is 15 $m^2$/g or less, a reaction between the carbonaceous material and the electrolytic solution can be suppressed.

In addition, when the specific surface area according to the BET 3-point method in nitrogen adsorption is set to 1 $m^2$/g or more, there is an effect capable of obtaining appropriate permeability of the electrolytic solution into the carbonaceous material.

A method of calculating the specific surface area is as follows.

An amount of monomolecular adsorption Wm is calculated from the following Expression (1), a total surface area Stotal is calculated from the following Expression (2), and the specific surface area S is obtained from the following Expression (3).

$$1/[W(Po/P-1) = (C-1)/WmC(P/Po)/WmC \cdots (1)$$

In Expression (1), P: a gas pressure of an adsorbate that enters an adsorption equilibrium state, Po: a saturated vapor pressure of the adsorbate at an adsorption temperature, W: an adsorbed amount at an adsorption equilibrium pressure P, Wm: an adsorbed amount in a monomolecular layer, C: a constant relating to a magnitude of interaction between a solid surface and the adsorbate (C =exp{(E1-E2)RT})[E1: adsorption heat of a first layer (kJ/mol), E2: liquefaction heat at a measurement temperature of the adsorbate (kJ/mol)]

$$Stotal = (WmNAcs)M \cdots (2)$$

In Expression (2), N: Avogadro's number, M: a molecular weight, Acs: an adsorption cross-sectional area

$$S = Stotal/W \cdots (3)$$

In Expression (3), w: a sample weight (g)

In a representative example of a resin or a resin composition, the hard carbon described above may be produced as follows.

First, a resin or a resin composition, which is to be subjected to a carbonization treatment, is produced.

A device of preparing the resin composition is not particularly limited. However, for example, in a case of performing melting and mixing, a kneading device such as a kneading roll and a monoaxial or biaxial kneader may be used. In addition, in a case of performing dissolving and mixing, a mixing device such as a Henschel mixer and a disperser may be used. In addition, in a case of performing pulverization and mixing, for example, a device such as a hammer mill and a jet mill may be used.

The resin composition, which can be obtained in the above-described manner, may be a resin composition obtained by only physically mixing a plurality of kinds of components, or a part of the resin composition may be subjected to a chemical reaction by a mechanical energy that is applied at the time of mixing (agitation, kneading, and the like) during preparation of the resin composition and a thermal energy converted from the mechanical energy. Specifically, the resin composition may be subjected to a mechanochemical reaction due to the mechanical energy and a chemical reaction due to the thermal energy.

The hard carbon is obtained by subjecting the resin composition or the resin to a carbonization treatment.

Here, conditions of the carbonization treatment are not particularly limited. However, for example, the carbonization treatment may be performed by temperature-rising from room temperature at a rate of 1°C/hour to 200°C/hour, and retention at 800°C to 3000°C for 0.1 hours to 50 hours, and preferably 0.5 hours to 10 hours. With regard to an atmosphere during the carbonization treatment, it is preferable to perform the carbonization treatment in an inert atmosphere such as nitrogen and helium gas, a substantially inert atmosphere in which a trace amount of oxygen is present in the inert gas, or a reducing gas atmosphere. According to this configuration, thermal decomposition (oxidation and decomposition) of the resin is suppressed, and thus a desired carbonaceous material may be obtained.

Conditions such as temperature and time during the carbonization treatment may be appropriately adjusted to realize optimal hard carbon characteristics.

In addition, appropriate conditions may be determined according to a resin and the like to obtain a carbonaceous material in which the full width at half maximum of a peak which is measured by the XPS method and is recognized in the vicinity of 285 eV is 0.8 eV to 1.8 eV. However, for example, the temperature during the carbonization treatment may be set to 1000°C or higher or a temperature rising rate may be set to be less than 200°C/hour.

According to the above-described treatment, it is assumed that the surface of the hard carbon is constituted by inactive functional groups and thus it is possible to obtain the hard carbon having a full width at half maximum of a peak, which is measured by the XPS method and is recognized in the vicinity of 285 eV, of 0.8 eV to 1.8 eV.

In addition, a pre-carbonization treatment may be performed before the carbonization treatment.

Here, conditions of the pre-carbonization treatment are not particularly limited. However, for example, the pre-carbonization treatment may be performed at 200°C to 600°C for 1 hour to 10 hours. In this manner, the pre-carbonization treatment is performed before the carbonization treatment to make the resin composition, the resin, and the like infusible. Accordingly, even when a pulverizing treatment of the resin composition or the resin is performed before the carbonization treatment process, the resin composition, the resin, and the like after being pulverized are prevented from being refused during the carbonization treatment. As a result, a desired carbonaceous material can be effectively obtained.

At this time, as an example of a method of obtaining the hard carbon in which the positron lifetime measured by the positron annihilation method is 370 picoseconds to 480 picoseconds, a method of performing the pre-carbonization treatment in a state in which a reducing gas and an inert gas are not present may be exemplified.

In addition, in a case of using a thermosetting resin or a polymerizable high molecular compound as a resin for production of the hard carbon, a curing treatment of the resin composition or the resin may be performed before the pre-carbonization treatment.

A curing treatment method is not particularly limited. However, for example, the curing treatment may be performed by a method of thermally curing the resin composition by applying heat to the resin composition in an amount capable of causing a curing reaction, a method of using the resin and a curing agent in combination, and the like. According to this, the pre-carbonization treatment is completed in a substantially solid state, the carbonization treatment or the pre-carbonization treatment can be performed in a state in which a resin structure is maintained to a certain degree, and thus it is possible to control the structure or characteristics of the hard carbon.

In addition, in a case of performing the carbonization treatment or the pre-carbonization treatment, a metal, a pigment, a lubricant, an antistatic agent, an antioxidant, and the like are added to the resin composition to apply desired characteristics to the carbonaceous material.

In a case of performing the above-described curing treatment and/or the pre-carbonization treatment, an object to be treated may be pulverized before the carbonization treatment. In this case, a variation in a thermal history during the carbonization treatment is reduced, and thus homogeneity in a surface state of the hard carbon may be raised. In addition, handling properties of the object to be treated may be made to be satisfactory.

Further, to obtain the hard carbon in which the positron lifetime measured by the positron annihilation method is 370 picoseconds to 480 picoseconds, for example, natural cooling to 800°C to 500°C may be performed in the presence of a reducing gas or an inert gas after the carbonization treatment as necessary, and then may be cooled to 100°C or lower at a rate of 100°C/hour.

According to the configuration described above, cracking in the hard carbon due to rapid cooling is suppressed, and thus voids that are formed may be maintained. According to this reason, it is assumed that the hard carbon in which the positron lifetime measured by the positron annihilation method is 370 picoseconds to 480 picoseconds can be obtained.

In addition, as a material that constitutes the negative electrode material layer 1, in addition to the carbonaceous material, a fluorine-based polymer including polyethylene, polypropylene, and the like, a rubber-like polymer such as polyvinylidene fluoride (PVDF), carboxymethyl cellulose (CMC), butadiene rubber, and styrene-butadiene rubber (SBR latex), polyimide, and the like may be added as a binder.

For example, the negative electrode 10 may be produced as follows.

1 part by weight to 30 parts by weight of binder and an appropriate amount of viscosity control solvent (water, N-methyl-2- pyrrolidone, dimethyl formamide, and the like) are added to 100 parts by weight of carbonaceous material for lithium ion secondary batteries, and kneading is performed to obtain a paste-like mixture. The mixture is molded into a sheet shape or a pellet shape by compression molding, roll molding, and the like, thereby obtaining the negative electrode material layer 1. In addition, the negative electrode 10 may be obtained by laminating the negative electrode material layer 1 obtained in this manner, and the negative electrode current collector 2.

In addition, the negative electrode 10 may be obtained as follows. 1 part by weight to 30 parts by weight of binder and an appropriate amount of viscosity control solvent (water, N-methyl-2- pyrrolidone, dimethyl formamide, and the like) are added to 100 parts by weight of carbonaceous material for lithium ion secondary batteries, and kneading is performed to obtain a slurry-like mixture. This mixture is used as a negative electrode material, and this negative electrode material is applied onto the negative electrode current collector 2 to form the negative electrode material layer 1, thereby producing the negative electrode 10.

<Wound Body and Lithium Ion Secondary Battery>

Next, a wound body that uses the negative electrode for lithium ion secondary batteries, and a lithium ion secondary battery will be described.

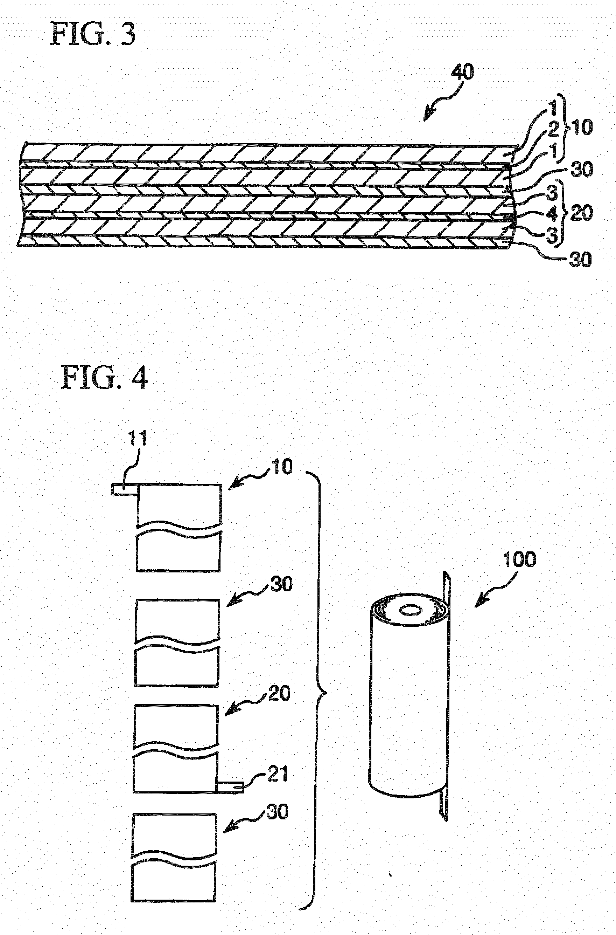

FIG 3 is a cross-sectional view illustrating an example of a layer configuration of a wound body that is applied to a lithium ion secondary battery, and FIG. 4 is a schematic view illustrating an example of a wound body that constitutes a lithium ion secondary battery.

A wound body 100 is constituted by a laminated body 40 in which the negative electrode 10, a positive electrode 20, and a separator 30 are laminated as shown in FIG 3, and the wound body 100 is formed by winding the laminated body.

As described above, the negative electrode 10 is constituted by two negative electrode material layers 1 and the negative electrode current collector 2 that is interposed between the two negative electrode material layers 1.

As shown in FIG 3, the positive electrode 20 includes a positive electrode material layer 3 and a positive electrode current collector 4, and the the positive electrode 20 is constituted by a laminated body in which the positive electrode current collector 4 is interposed between two positive electrode material layers 3.

As a positive electrode material that constitutes the positive electrode material layer 3, for example, a composite oxide such as a lithium-cobalt oxide ($LiCoO_2$), a lithium-nickel oxide ($LiNiO_2$), and a lithium-manganese oxide ($LiMn_2O_4$), a conductive polymer such as polyaniline and polypyrrole, and the like may be used without particular limitation.

As the positive electrode current collector 4, for example, aluminum foil may be used.

In addition, in this embodiment, the positive electrode 20 may be produced according to a method of producing a positive electrode which is already known.

In this embodiment, one layer of the separator 30 is provided between the negative electrode 10 and the positive electrode 20, and one layer of the separator 30 is also provided on a lower surface of the laminated body 40 on a positive electrode 20 side in order for the negative electrode 10 and the positive electrode 20 not to come into contact with each other on upper and lower surfaces of the laminated body 40 during winding.

As the separator 30, for example, a porous film such as polyethylene and polypropylene, non-woven fabric, and the like may be used without particular limitation.

In addition, as shown in FIG 4, a terminal 11 is provided to the negative electrode 10, and a terminal 21 is provided to the positive electrode 20.

In addition, as shown in FIG 4, the laminated body 40 is wound to form a wound body 100.

The wound body 100 is inserted into a battery casing, an electrolyte is injected into the battery casing, and the battery casing is sealed, thereby obtaining a lithium ion secondary battery. A terminal 11 side becomes a negative electrode, and a terminal 21 side becomes a positive electrode.

As the electrolyte, a solution, which is obtained by dissolving a lithium salt as an electrolyte in a nonaqueous solvent, is used.

As the nonaqueous solvent, a mixture of cyclic esters such as propylene carbonate, ethylene carbonate, and $\gamma$-butyrolactone, chain esters such as dimethyl carbonate and diethyl carbonate, and chain ether such as dimethoxy ethane, and the like may be used.

As the electrolyte, lithium metal salts such as $LiClO_4$ and $LiPF_6$, tetraalkyl ammonium salt, and the like may be used. In addition, the electrolyte may be used as a solid electrolyte by mixing the salts in polyethylene oxide, polyacrylonitrile, and the like.

Hereinbefore, the invention has been described on the basis of the preferred embodiment, but the invention is not limited thereto.

Examples

Hereinafter, the invention will be described in detail on the basis of Examples and Comparative Example, but the invention is not limited thereto. In addition, in Examples and Comparative Example, "part" represents "part by weight", and "%" represents "% by weight".

First, a measurement method in the following Examples and Comparative Example will be described.

1. Method of Measuring Position Lifetime According to Positron Lifetime Method

Electromagnetic waves (annihilation $\gamma$-rays) which are generated when a positron is annihilated are measured by using a positron·positronium lifetime measurement·nano-void measuring device (manufactured by National Institute of Advanced Industrial Science and Technology) to measure a positron lifetime.

A specific measuring method is as follows.

(A) Positron source: a position is generated from generation of an electron and positron pair by using an electron accelerator of a measurement frontier research part of National Institute of Advanced Industrial Science and Technology (the electron accelerator irradiates a target (tantalum) with an electron beam to cause generation of an electron and positron pair, thereby generating a positron).

(B) Gamma-ray detector: $BaF_2$ scintillator and photomultiplier tube

(C) Measurement temperature and atmosphere: 25°C, in vacuum ($1\times10^{-5}$ Pa ($1\times10^{-7}$ Torr))

(D) Number of counts of annihilation $\gamma$-rays: $3\times10^6$ or more

(E) Positron beam energy: 10 keV

(F) Sample size: Powder is applied onto a sample holder (aluminum plate) in a thickness of 0.1 mm

2. Analysis of Surface State by XPS Measurement

Measurement was carried under the following conditions by using Escalab-220iXL (manufactured by Thermo Fisher Scientific K.K.), and a full width at half maximum of a peak, which is obtained and is recognized in the vicinity of 285 eV, was calculated by the following calculation method.

(Measurement Conditions)

X-ray source: Mg-K$\alpha$
Output: 12 kV-10 mA

(Calculation Method)

Peak intensity and a full width at half maximum of the peak were obtained as described below on the basis of a spectrum that was obtained.

When obtaining peak intensity, a base line is drawn from both ends of a target peak, and intensity from the base line to the peak point is set as peak intensity. The reason of this setting is as follows. A base line of a spectrum that is commonly obtained varies due to an environment during measurement, a difference in a sample, and the like. In addition, in the spectrum that is obtained, in a case where a plurality of peaks overlap with each other, the base line is drawn from both ends of the overlapping peaks. In addition, the the full width at half maximum of a peak is obtained by drawing a line from a point, at which intensity is half the peak intensity obtained from the peak point as described above, in parallel with the base line and reading energy at intersections with both ends of the peak.

3. Average Interplanar Spacing ($d_{002}$), Size (Lc) of Crystallite in c-Axis Direction

An average interplanar spacing was measured by using an X-ray diffraction device "XRD-7000" manufactured by SHIMADZU CORPORATION.

The average interplanar spacing $d_{002}$ was calculated from a spectrum, which was obtained by the X-ray diffraction measurement with respect to the carbonaceous material, by using the following Bragg equation.

$$\lambda = 2d_{hkl}\sin\theta \text{ (Bragg equation) } (d_{hkl} = d_{002})$$

$\lambda$: Wavelength of characteristic X-ray K$\alpha$1 output from a negative electrode

$\theta$: Reflection angle of a spectrum

In addition, Lc was measured as follows.

Lc was determined from a full width at half maximum of a 002-plane peak in a spectrum which was obtained from X-ray diffraction measurement, and a diffraction angle by using the following Scherrer equation.

$$Lc = 0.94\ \lambda/(\beta\cos\theta)\quad \text{(Scherrer equation)}$$

Lc: Size of a crystallite

$\lambda$: Wavelength of characteristic X-ray K$\alpha$1 output from a negative electrode

$\beta$: Full width at half maximum (radian) of a peak

$\theta$: Reflection angle of a spectrum

4. Specific Surface Area

A specific surface area was measured by using Nova-1200 device manufactured by Yuasa-Ionics Co. Ltd. according to a BET 3-point method in nitrogen adsorption. Specific calculation method is the same as described above in the embodiment.

5. Carbon Content and Nitrogen Content

The carbon content and the nitrogen content were measured by using an element analysis and measurement device (PE2400, manufactured by PerkinElmer, Inc.). A measurement sample was converted into $CO_2$, $H_2O$, and $N_2$ by using a combustion method, and the resultant gasified sample was homogenized and was allowed to pass through a column. According to this, these gases are separated from each other step by step, and the carbon content, the hydrogen content, and the nitrogen content were measured from respective thermal conductivities.

A) Carbon Content

The hard carbon that was obtained was subjected to a drying treatment at 110°C in vacuum for 3 hours, and then a carbon composition ratio was measured by using an element analysis and measurement device.

B) Nitrogen Content

The hard carbon that was obtained was subjected to a drying treatment at 110°C in vacuum for 3 hours, and then a nitrogen composition ratio was measured by using an element analysis and measurement device.

6. Measurement of Moisture Content and Limit Radius of Curvature

(1) Production of Negative Electrode for Evaluation

10 parts of polyvinylidene fluoride as a bonding agent (binder) and appropriate amount of water as a diluting solvent were added to 100 parts of carbonaceous material that was obtained in each of Examples and Comparative Example and mixing was performed, thereby preparing a slurry-like negative electrode mixture. The slurry-like negative electrode mixture that was prepared was applied onto both surfaces of copper foil having a thickness of 18 μm, and then the mixture was vacuum-dried at 110°C for 1 hour. Weight after drying was weighed and then drying was performed at 130°C for 30 minutes. After confirming that a variation in weight before and after the drying at 130°C for 30 minutes was not present, a negative electrode for evaluation was obtained. The thickness of the negative electrode material layer was 50 μm.

(2) Measurement of Limit Radius of Curvature

The negative electrode for evaluation that was obtained was wound around columns having radius of 15 mm, 10 mm, and 2 mm, respectively, and observation was made with the naked eye to confirm whether or not abnormality such as interlayer peeling or damage occurred in the negative electrode material layer and the negative electrode current collector. In a case where abnormality does not occur, it can be seen that the limit radius of curvature is equal to or less than the radius of the column.

A case where the limit radius of curvature was 2 mm or less was set as A, a case where the limit radius of curvature was larger than 2 mm and equal to or less than 10 mm was set as B, a case where the limit radius of curvature was larger than 10 mm and equal to or less than 15 mm was set as C, and a case where the limit radius of curvature was larger than 15 mm was set as D.

7. Bipolar Coin Cell for Secondary Battery Evaluation

The negative electrodes obtained in Examples and Comparative Example were prepared.

Evaluation of the positive electrode was performed with a bipolar coin cell by using lithium metal. As an electrolytic solution, a solution, which was obtained by dissolving 1 mole/liter of lithium perchlorate in a mixed liquid of ethylene carbonate and diethyl carbonate in a volume ratio of 1:1, was used.

8. Charge Capacity, Discharge Capacity, and Charge and Discharge Efficiency

(1) Evaluation of Charge Capacity and Discharge Capacity

Charge conditions were as follows. Charge was performed until it reached 1 mV with a constant current of 25 mA/g, and a time at which a current was attenuated to 1.25 mA/g with 1 mV retention was set as a charge termination. In addition, the cut-off potential of discharge conditions was set to 1.5 V.

(2) Evaluation of Charge and Discharge Efficiency

Charge and discharge efficiency was calculated by the following expression on the basis of the value obtained in the item (1).

$$\text{Charge and discharge efficiency (\%)} = [\text{discharge capacity/charge capacity}] \times 100$$

(3) Evaluation of 60-Cycle Capacity Retention Rate

A ratio between a value of the charge and discharge capacity which was obtained in the item (1) and discharge capacity after repeating charge and discharge 60 times was calculated by the following expression.

$$\text{60-cycle capacity retention rate (\%)} = [\text{discharge capacity at a } 60^{th} \text{ cycle/charge capacity at a first cycle}] \times 100$$

Charge and discharge conditions after a second time were as follows. Charge was performed until it reached 1 mV with a constant current of 250 mA/g, and a time at which a current was attenuated to 12.5 mA/g with 1 mV retention was set as a charge termination. In addition, cut-off potential of discharge conditions was set to 1.5 V.

(4) Large Current Characteristics

On the basis of a value of the discharge capacity which was obtained in the item (1), a current value which was discharged in one hour was set as 1 C, and a ratio of discharge capacity obtained by discharge with a current value of 1 C and discharge capacity obtained by discharge with a current value of 5C [5C discharge capacity/I C discharge capacity] was set as an index of large current characteristics.

8. Examples

(Example 1)

As a resin composition, a phenol resin PR-217 (manufactured by Sumitomo Bakelite. Co., Ltd) was treated in the following sequence of (a) to (f), thereby obtaining hard carbon.
(a) Temperature-rising from room temperature to 500°C at a rate of 100°C/hour without performing any one of reducing gas substitution, inert gas substitution, reducing gas circulation, and inert gas circulation.
(b) Degreasing treatment at 500°C for 2 hours without performing any one of reducing gas substitution, inert gas substitution, reducing gas circulation, and inert gas circulation, and then cooling
(c) Pulverization with a vibration ball mill
(d) Temperature-rising from room temperature to 1200°C at a rate of 100°C/hour under inert gas (nitrogen) substitution and circulation
(e) Carbonization treatment at 1200°C for 8 hours under inert gas (nitrogen) circulation
(f) Natural cooling to 600°C under inert gas (nitrogen) circulation, and cooling from 600°C to 100°C or less at a rate of 100°C/hour

100 parts by weight of graphite (mesophase carbon micro beads) and 43 parts by weight of hard carbon that was obtained were mixed by using a mortar, thereby obtaining a carbonaceous material.

(Examples 2 to 5)

A carbonaceous material was obtained in the same manner as Example 1 except that content of graphite and content of the hard carbon were changed as shown in Table 1.

(Example 6)

An aniline resin (which was synthesized by the following method) was used instead of the phenol resin in Example 1.
100 parts of aniline and 697 parts of 3 7% formaldehyde aqueous solution, and 2 parts of oxalic acid were put into a three-mouth flask provided with a stirring device and a cooling tube, and were allowed to react with each other at 100°C for 3 hours. Then, dehydration was performed to obtain 110 parts of aniline resin. A weight-average molecular weight of the aniline resin that was obtained was approximately 800.
A resin composition, which was obtained by pulverizing and mixing 100 parts of aniline resin obtained as described above and 10 parts of hexamethylenetetramine, was treated in the same process as Example 1, thereby obtaining a carbonaceous material.

(Example 7)

The same resin composition as Example 6 was used.
In addition, a carbonaceous material was obtained in the same manner as Example 6 except that in the treatment of the resin composition, the processes of (d) and (e) in Example 1 were performed as described below.

> (d) Temperature-rising from room temperature to 1100°C at a rate of 100°C/hour under inert gas (nitrogen) substitution and circulation
> (e) Carbonization treatment at 1100°C for 8 hours under inert gas (nitrogen) circulation

(Example 8)

A carbonaceous material constituted by graphite (mesophase carbon micro beads) was prepared.

(Example 9)

A carbonaceous material constituted by the hard carbon of Example 1 was prepared.

(Comparative Example)

The same resin composition as Example 1 was used.
In addition, a carbonaceous material was obtained in the same manner as Example 1 except that in the treatment of the resin composition, the process of (c) in Example 1 was performed as described below.

(c) Pulverization by Centrifugal Pulverizer

The graphite content, the hard carbon content, the positron lifetime with respect to the hard carbon, XPS, the average interplanar spacing, the crystallite size, the specific surface area, the content rate of carbon, and the content rate of nitrogen in Examples and Comparative Example are shown in Table 1.
In addition, charge capacity, discharge capacity, charge and discharge efficiency, moisture content of the negative electrode material layer, and the limit radius of curvature in a case of using the carbonaceous materials obtained in Examples and Comparative Example as a negative electrode are shown in Table 1.
[Table 1]

Table 1

| | Graphite content [% by weight] | Hard carbon | | | | | | | | A/B | Charge capacity [mAh/g] | Discharge capacity [mAh/g] | Charge and discharge efficiency [%] | 60-cycle capacity retention rate [%] | 5 C discharge capacity/l C discharge capacity | Negative electrode |
| | | Content B [%by weight] | Positron lifetime [Ps] | XPS [ev] | $d_{002}$ [A] | Lc [A] | Specific surface area [m$^2$/g] | Carbon content [% by weight] | Nitrogen content [% by weight] | | | | | | | Limit radius of curvature |
|---|---|---|---|---|---|---|---|---|---|---|---|---|---|---|---|---|
| Example 1 | 70 | 30 | 408 | 1.1 | 3.78 | 9.99 | 7 | 97.5 | 0.9 | 2.3 | 335 | 315 | 94 | 94 | 0.92 | A |
| Example 2 | 60 | 40 | 408 | 1.1 | 3.78 | 9.99 | 7 | 97.5 | 0.9 | 1.5 | 346 | 320 | 92 | 95 | 0.93 | A |
| Example 3 | 80 | 20 | 408 | 1.1 | 3.78 | 9.99 | 7 | 97.5 | 0.9 | 4.0 | 323 | 310 | 95 | 90 | 0.87 | A |
| Example 4 | 90 | 10 | 408 | 1.1 | 3.78 | 9.99 | 7 | 97.5 | 0.9 | 9.0 | 318 | 296 | 93 | 86 | 0.82 | A |
| Example 5 | 55 | 45 | 408 | 1.1 | 3.78 | 9.99 | 7 | 97.5 | 0.9 | 1.2 | 347 | 300 | 86 | 95 | 0.94 | A |
| Example 6 | 70 | 30 | 446 | 1.2 | 3.64 | 11.4 | 6 | 96.5 | 1.6 | 2.3 | 332 | 309 | 93 | 94 | 0.93 | A |
| Example 7 | 70 | 30 | 404 | 1.5 | 3.66 | 10.7 | 5 | 95.0 | 2.9 | 2.3 | 366 | 341 | 93 | 92 | 0.81 | A |
| Example 8 | 100 | - | - | - | - | - | - | - | - | - | 290 | 276 | 94 | 21 | 0.57 | A |
| Example 9 | - | 100 | 408 | 1.1 | 3.78 | 9.99 | 7 | 97.5 | 0.9 | - | 483 | 377 | 78 | 97 | 0.97 | B |
| Comparative Example | - | 100 | 408 | 1.1 | 3.78 | 9.99 | 7 | 97.5 | 0.9 | - | 321 | 240 | 78 | 83 | 0.81 | D |

As can be seen from Table 1, in the lithium ion secondary battery using the negative electrode for lithium ion secondary batteries of the invention, stable characteristics were exhibited in any item. In contrast, sufficient results were not obtained in Comparative Example.

Industrial Applicability

The invention is applicable to a lithium ion secondary battery having characteristics such as stable output and stable capacity, and a negative electrode for lithium ion secondary batteries which is required for the lithium ion secondary battery. Reference Signs List

| 10: | Negative electrode |
| 1: | Negative electrode material layer |
| 2: | Negative electrode current collector |
| 20: | Positive electrode |
| 3: | Positive electrode material layer |
| 4: | Positive electrode current collector |
| 30: | Separator |
| 40: | Laminated body |
| 100: | Wound body |
| 11,21: | Terminal |

**Claims**

1.   A negative electrode for lithium ion secondary batteries, comprising:

   a laminated body of a negative electrode material layer that is mainly constituted by a carbonaceous material, and a negative electrode current collector,
   wherein when the negative electrode material layer is in a dry state, a limit radius of curvature of a negative electrode is 15 mm or less.

2.   The negative electrode for lithium ion secondary batteries according to claim 1,
   wherein the carbonaceous material contains hard carbon.

3.   The negative electrode for lithium ion secondary batteries according to claim 2,
   wherein content of the hard carbon in the carbonaceous material is 5% by weight to 45% by weight.

4.   The negative electrode for lithium ion secondary batteries according to any one of claims 1 to 3,
   wherein a positron lifetime of the hard carbon, which is measured by a position annihilation method under the following conditions (A) to (E), is 370 picoseconds to 480 picoseconds,

   (A) positron source: Positrons are generated from electron-positron pairs by using an electron accelerator,
   (B) gamma-ray detector: $BaF_2$ scintillator and photomultiplier tube,
   (C) measurement temperature and atmosphere: 25°C, in vacuum,
   (D) number of counts of annihilation $\gamma$-rays: $3 \times 10^6$ or more,
   (E) positron beam energy: 10 keV, and

   a full width at half maximum of a peak, which is measured by X-ray photoelectron spectroscopy (XPS method) and is recognized in the vicinity of 285 eV, is 0.8 eV to 1.8 eV.

5.   The negative electrode for lithium ion secondary batteries according to any one of claims 1 to 4,
   wherein the carbonaceous material contains graphite.

6.   The negative electrode for lithium ion secondary batteries according to claim 5,
   wherein content of the graphite is 55% by weight to 95% by weight.

7.   The negative electrode for lithium ion secondary batteries according to any one of claims 1 to 6,

wherein the carbonaceous material contains hard carbon and carbonaceous material, and
when content of the graphite is set to A [% by weight] and content of the hard carbon is set to B [% by weight], a relationship of $1.2 \leq A/B \leq 19$ is satisfied.

8. A lithium ion secondary battery, comprising:

a wound body that is obtained by winding laminated body in which the negative electrode for lithium ion secondary batteries according to any one of claims 1 to 7, a separator, and a positive electrode for lithium ion secondary batteries are laminated; and
an electrolyte.

FIG. 1

FIG. 2

## FIG. 3

## FIG. 4

## INTERNATIONAL SEARCH REPORT

| International application No. |
|---|
| PCT/JP2012/074826 |

A. CLASSIFICATION OF SUBJECT MATTER
*H01M4/133*(2010.01)i, *H01M4/36*(2006.01)i, *H01M4/587*(2010.01)i, *H01M10/0525*(2010.01)i, *H01M10/0587*(2010.01)i

According to International Patent Classification (IPC) or to both national classification and IPC

B. FIELDS SEARCHED

Minimum documentation searched (classification system followed by classification symbols)
H01M4/00-4/62, H01M10/05-10/0587

Documentation searched other than minimum documentation to the extent that such documents are included in the fields searched
Jitsuyo Shinan Koho          1922–1996    Jitsuyo Shinan Toroku Koho    1996–2012
Kokai Jitsuyo Shinan Koho    1971–2012    Toroku Jitsuyo Shinan Koho    1994–2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-357888 A (Shin-Kobe Electric Machinery | 1,2,5,8 |
| Y | Co., Ltd.), | 3,4,6,7 |
|  | 26 December 2001 (26.12.2001), |  |
|  | paragraphs [0012] to [0019], [0029] to [0035], |  |
|  | [0055], [0058]; tables 1, 2 |  |
|  | (Family: none) |  |
| X | JP 2008-287936 A (Asahi Kasei Chemicals Corp.), | 1,2,5,8 |
| Y | 27 November 2008 (27.11.2008), | 3,4,6,7 |
|  | paragraphs [0005], [0020], [0041] to [0046] |  |
|  | (Family: none) |  |
| Y | JP 11-250909 A (Mitsubishi Electric Corp.), | 3,6,7 |
|  | 17 September 1999 (17.09.1999), |  |
|  | claim 1; paragraphs [0005] to [0007], [0017] to |  |
|  | [0026]; fig. 1; table 1 |  |
|  | (Family: none) |  |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance |  |  |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |  |  |
| "P" | document published prior to the international filing date but later than the priority date claimed | "&" | document member of the same patent family |

| Date of the actual completion of the international search | Date of mailing of the international search report |
|---|---|
| 08 November, 2012 (08.11.12) | 20 November, 2012 (20.11.12) |

| Name and mailing address of the ISA/ | Authorized officer |
|---|---|
| Japanese Patent Office |  |
| Facsimile No. | Telephone No. |

Form PCT/ISA/210 (second sheet) (July 2009)

**INTERNATIONAL SEARCH REPORT**

International application No.

PCT/JP2012/074826

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 7-192724 A  (Sony Corp.), 28 July 1995 (28.07.1995), claims 1 to 11; paragraphs [0013] to [0015], [0089] to [0092], [0097], [0108] to [0113], [0118]; tables 1 to 3 & US 5451477 A          & EP 627777 A3 & DE 69422854 T          & DE 69422854 D & CA 2125003 A          & CA 2125003 A1 | 3,6,7 |
| Y | JP 2002-270159 A  (Sony Corp.), 20 September 2002 (20.09.2002), claims 1, 2; table 1 (Family: none) | 3,6,7 |
| Y | WO 2011/064936 A1  (Sumitomo Bakelite Co., Ltd.), 03 June 2011 (03.06.2011), entire text & CN 102668195 A | 4 |
| X | JP 10-92428 A  (Toshiba Corp.), 10 April 1998 (10.04.1998), paragraphs [0037] to [0102]; table 1 (Family: none) | 1,8 |
| A | JP 2002-124256 A  (Mitsubishi Gas Chemical Co., Inc.), 26 April 2002 (26.04.2002), claim 1; paragraph [0014] (Family: none) | 4 |

Form PCT/ISA/210 (continuation of second sheet) (July 2009)

**INTERNATIONAL SEARCH REPORT**

| International application No. |
| --- |
| PCT/JP2012/074826 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    JP 10-92428 A  (Toshiba Corp.), 10 April 1998 (10.04.1998), paragraphs [0037] to [0102]; table 1
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

| International application No. |
| --- |
| PCT/JP2012/074826 |

<u>Continuation of Box No.III of continuation of first sheet(2)</u>

The above-mentioned document sets forth "a negative electrode for nonaqueous electrolyte secondary batteries, which is obtained by applying a slurry that contains a fibrous carbonaceous material which absorbs and desorbs lithium ions (said fibrous carbonaceous material corresponding to "a carbon material") over a collector and drying the slurry thereon, and wherein the minimum curvature radius is 0.5, 1, 1.5, 2.0, 2.5 or 3 (mm)". Consequently, the invention of claim 1 cannot be considered novel over document 6, and thus does not have a special technical feature.

Therefore, it is obvious that the group of inventions set forth in claims 1-8 do not comply with the requirement of unity of invention.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011220974 A
- JP 2404319311 B